Europäisches Patentamt

**European Patent Office**

Office européen des brevets

(19)

(11) Veröffentlichungsnummer: **0 319 789 B1**

(12) **EUROPÄISCHE PATENTSCHRIFT**

(45) Veröffentlichungstag der Patentschrift: **24.02.93**

(51) Int. Cl.5: **C05F 7/00**, C02F 11/18, C05D 3/02

(21) Anmeldenummer: **88119626.5**

(22) Anmeldetag: **25.11.88**

(54) **Verfahren zur Herstellung eines getrockneten, granulatförmigen Klärschlamms.**

(30) Priorität: **08.12.87 DE 3741468**

(43) Veröffentlichungstag der Anmeldung:
**14.06.89 Patentblatt 89/24**

(45) Bekanntmachung des Hinweises auf die
Patenterteilung:
**24.02.93 Patentblatt 93/08**

(84) Benannte Vertragsstaaten:
**AT BE CH DE ES FR GB IT LI NL SE**

(56) Entgegenhaltungen:
DE-A- 475 429     DE-A- 495 188
DE-A- 497 719     DE-A- 953 613
DE-A- 2 523 628    DE-A- 2 800 915
DE-A- 3 513 147    DE-A- 3 518 905

PROSPEKT "REFERTIEL", 1974, VAN ZIJL'S
INDUSTRIE EN HANDELSONDERNEMING,
Bunnik, NL

ZEMENT-KALK-GIPS, Band 35, Nr. 6, Juni
1982, Seiten 318-323, Wiesbaden-Biebrich,
DE; V. ZIESS et al.: "Kalk-Klärschlamm - Produkt für die Landwirtschaft oder unbedenkliches Deponiegut"

J. Heinrich u. B. Koglin, Korrespondenz Abwasser, 5/87, 34. Jahrgang, 526-534

(73) Patentinhaber: **LIMUS UMWELTTECHNIK GMBH**
**Sickingenstrasse 9-13**
**W-1000 Berlin 21(DE)**

(72) Erfinder: **Koglin, Bodo, Dr.**
**Amazeile 6**
**W-1000 Berlin 27(DE)**

(74) Vertreter: **Patentanwälte RUFF, BEIER und**
**SCHÖNDORF**
**Neckarstrasse 50**
**W-7000 Stuttgart 1 (DE)**

EP 0 319 789 B1

**Beschreibung**

Die Erfindung betrifft ein Verfahren zur Herstellung eines getrockneten, granulatförmigen Klärschlamms aus vorentwässertem Klärschlamm.

In dem Artikel "Der Hamburger Faulschlamm wird getrocknet" von J. Heinrich und B. Koglin (Korrespondenz Abwasser, 5)87, 34. Jahrgang) sind Versuche beschrieben, vorentwässerten Klärschlamm, insbesondere in Kontakttrocknern, beispielsweise Dünnschichttrocknern, zu trocknen, um den auf etwa 50 % TR (Prozent Trockensubstanz an der Gesamtmenge) getrocknetem Schlamm ohne weitere Nachbehandlung oder Zusätze deponieren zu können. Das erzeugte Produkt fiel dabei in Form größerer Klumpen an und war biologisch nicht völlig stabil.

Zur Verwendung von Klärschlamm werden derzeit folgende Methoden angewandt: Insbesondere bei kleinen Kläranlagen herrscht die Naßausbringung vor. Der Schlamm wird also nicht maschinell entwässert, sondern lediglich stabilisiert, so daß keine stärkeren Gerüche entstehen, und dann mit Geräten zur Ausbringung von Gülle auf den Feldern verteilt. Dazu muß aufgrund gesetzlicher Bestimmungen der Klärschlamm auch entseucht werden, was zusätzliche Maßnahmen, wie thermische oder aerob-thermophile Behandlung oder eine Kalkzugabe voraussetzt.

Größere Kläranlagen entwässern den Schlamm mit Hilfe von Zentrifugen, Siebbandpressen oder Filterpressen. Sofern er an die Landwirtschaft abgegeben werden soll, muß er streufähig gemacht und entseucht werden. Zentrifugen und Siebbandpressen erreichen nach Konditionierung mit Polyelektrolyten 18 bis 28 % Trockenrückstand (TR). Der Schlamm hat dann eine schmierige Konsistenz und kann so weder ausgestreut noch deponiert werden. Daher wird Kalk, meist Branntkalk, in erheblicher Menge zugesetzt, so daß ein Gemisch mit 35 bis 40 % TR entsteht und mit den überall vorhandenen Miststreuern ausgebracht werden kann. Bei der Vermischung mit Branntkalk findet eine Erwärmung statt, wodurch der Schlamm auch entseucht wird. Derartige Verfahren sind z. B. in den DE-B-28 00 915 und DE-A-25 23 628 sowie der Veröffentlichung "Zement-Kalk-Gips", Vol. 35, Nr. 6, Juni 1982, S. 318 - 323, beschrieben.

Filterpressen fordern meist schon eine Konditionierung mit Kalk (Kalkhydrat) und Eisensalzen; der Filterkuchen ist dann ebenfalls entseucht.

Der entwässerte und so mit erheblichen Mengen Kalb versetzte Schlamm kann wegen der u. a. durch den Kalkzusatz entstandenen erheblichen Mengen und des übergroßen Kalkanteils nur schwer im gewünschten Umfang in der Landwirtschaft untergebracht werden.

Wollte man zur landwirtschaftlichen Nutzung eine Trocknung des Klärschlamms vornehmen, so müßte dieser auf über 90 % TR getrocknet werden, um das Gut biologisch zu stabilisieren. Dabei würde ein so hoher Feinstaubanteil entstehen, daß die Gefahr von Staubbränden oder Explosionen infolge Selbstentzündung bestünde.

Bei der Trocknung von Schlamm mit Konvektiontrocknern, bei denen der Schlamm durch heiße Gase, im allgemeinen Rauchgase, direkte getrocknet wird, gelangen im Schlamm enthaltene oder durch Verschwelen entstandene Geruchsstoffe in das Abgas, was aufwendige Desodorierungsmaßnahmen erfordern würde. Der bei der Trocknung entstandene Wasserdampf wäre mit den Trocknungsgasen vermischt, so daß eine Wärmerückgewinnung nur in bescheidenem Umfang erfolgen könnte.

Aus der DE-C-495 188 ist ein Verfahren bekanntgeworden, bei dem einem Faulschlamm, bezogen auf en Trockensubstanzanteil, 100 % Ätzkalk zugegeben wird. Eine nachfolgende Trocknung wird im Trommeltrockner mittels Feuerungs-Abgasen bis auf einen Trockensubstanzanteil von 90 % durchgeführt, wobei infolge der Kohlensäure in den Abgasen eine Umsetzung in Calciumkarbonat erfolgt.

Aus der DE-A-35 13 147 ist bekanntgeworden, einem Faulschlamm ca. 10 % Branntkalk zuzusetzen und danach eine Trocknung in einem belüfteten Trockenschrank oder anderem Trockner über die sehr lange Zeit von ca. 24 Stunden vorzunehmen. Das somit extrem weit getrocknete Endprodukt wird als geruchsfrei und gut deponierfähig beschrieben.

Aufgabe der Erfindung ist es, ein Verfahren zur Herstellung von getrocknetem, granulatförmigem Klärschlamm aus vorentwässertem Klärschlamm zu schaffen, das es ermöglicht, ein landwirtschaftlich nutzbares Gut guter Ausbringbarkeit, ausreichender biologischer Stabilität, und mit einwandfreien hygienischen Eigenschaften in einem leicht durchführbaren Verfahren herzustellen.

Diese Aufgabe wird durch den Anspruch 1 gelöst.

Verglichen mit den Kalkmengen, die bei ungetrocknetem Schlamm zugesetzt wurden, können die Kalkmengen relativ gering sein. Es sollte vorzugsweise soviel zugegeben werden, daß der pH-Wert auf über 11 steigt, um eine biologische Stabilisierung ohne sonstige Maßnahmen zu bewirken. Die dazu nötigen Mengen können je nach der Art des verwendeten Schlammes unterschiedlich sein. Sie werden in einer Größenordnung von 0,5 bis 10 %, vorzugsweise 1 bis 3 % (bezogen auf vorentwässerten Schlamm mit 25 % TR) bzw. von 2 bis 40 %, vorzugsweise 4 bis 12 % (bezogen auf die Trockensubstanz des Schlamms), betragen.

Es hat sich überraschend gefunden, daß durch die Zugabe einer so geringen Menge Kalk, insbesondere bei der Trocknung im Kontakttrockner, schon bei geringeren Trocknungsgraden (40 % bis 75 % und vorzugsweise 60 bis 75 %) ein Granulat mit Korngröße von 1 bis 5 mm (vorzugsweise 2 bis 5 mm) entsteht, das gut mit dem Düngerstreuer ausgegeben werden kann. Lagerungsversuche haben gezeigt, daß das Trockengut biologisch stabilisiert ist. Weder unter aeroben- noch unter anaeroben Bedingen konnte eine Veränderung des Aussehens, des Geruches oder eine Pilzbildung beobachtet werden. Die Gefahr der Selbstentzündung durch Feinstaub entsteht nicht. Der relativ geringe Kalkanteil entspricht den Wünschen der Landwirtschaft und verbessert die Düngequalität, ohne durch zu hohen Kalkanteil an Wert und Einsatzmöglichkeiten zu verlieren.

Das entstehende Gut ist also ein Dünge- bzw. Bodenverbesserungsmittel mit folgenden Eigenschaften: Es ist stabilisiert, d. h. bei seiner Handhabung treten keine belästigenden Gerüche infolge biologischer Veränderungen auf; es ist hygienisiert, d. h. seuchenhygienisch unbedenklich, weil es im Trockner entsprechend hohen Temperaturen ausgesetzt war; es weist im Vergleich zu seinem landwirtschaftlichen Nutzen ein relativ geringes Gewicht auf, ist als Granulat mit einer Durchschnittskorngröße von etwa 3 mm hervorragend mit üblichen Düngerstreuern ausbringbar und ist lagerfähig, da die Landwirtschaft das Gut nicht zu allen Jahreszeiten gleichmäßig abnimmt. Zur Lagerfähigkeit gehört, daß der getrocknete Klärschlamm biologisch nicht mehr aktiv ist, so daß ein Verklumpen, beispielsweise durch Pilzbildung, nicht mehr eintritt. Ferner enthält er keinen Feinstaub, der zu Explosionen und Bränden führen könnte.

Die vorzugsweise als Kontakttrocknung und besonders bevorzugt als Dünnschichttrocknung ausgeführte Trocknung kann mit dem preiswerten, bei der anaeroben Stabilisierung anfallenden Faulgas betrieben werden, das anderweitig nur mit geringem Nutzen verbraucht werden kann. Da bei Kontakttrocknern das Gut indirekt über beheizte Wände erwärmt wird, fällt der ausgetriebene Wasserdampf mit nur wenig anderen Gasen, vor allem Leckluft, vermischt an. Die in den Brüden enthaltene Wärme ist somit fast vollständig für Heizzwecke nutzbar und kann insbesondere zur Vorwärmung von Rohschlamm etc. eingesetzt werden. Die verbleibenden nichtkondensierenden Gase können wegen ihrer geringen Menge leicht in der Feuerung des Wärmeerzeugers mitverbrannt und damit desodoriert werden. Insbesondere Dünnschichttrockner haben den Vorteil, daß sie mit großen Trocknungsgeschwindigkeiten arbeiten und damit nur eine geringe Klärschlamm-Menge in ihnen enthalten ist. Damit ist es möglich, die Anlagen schnell an- und abzufahren und damit auf diskontinuierlich nur wenige Stunden am Tag zu arbeiten, wie dies bei vielen Anlagen gefordert wird.

Der ihnen sonst anhängende Nachteil, daß höhere Trocknungsgrade von über 60 % TR während des sich dann rapide verschlechternden Wärmeüberganges schwer und nur mit größerem apparativem Aufwand zu erzielen sind, fallen nicht ins Gewicht, weil die Trocknung häufig schon bei diesem Trocknungsgrad zu einem befriedigenden Produkt führt. Dabei ist insbesondere die Granulatform erstaunlich, weil bei der Anwendung ohne Verwendung des erfindungsgemäßen Kalkzusatzes das Trockengut bei 50 % TR als faustgroße Klumpen, bei 65 % TR in Schuppen von ca. 25 mm Länge und bei über 85 % TR weitgehend als Staub anfällt. Alle diese Trockengutformen sind nicht in der beschriebenen Weise einsetzbar.

Bevorzugt erfolgt die Kalkzugabe zwischen mechanischer Entwässerung auf Zentrifugen oder Siebbandpressen und Trocknung. Als Zugabeeinrichtung könnte ein sog. Pflugscharmischer eingesetzt werden, der beide Komponenten innig miteinander vermischt. Zweckmäßigerweise wird Kalkhydrat zugemischt. Zwar würde eine Verwendung von Branntkalk einen zusätzlichen Wasserentzug bewirken und auch ein eventueller Preisvorteil dürfte die schwierigere Handhabung des Branntkalks nicht aufwiegen. Ferner könnte eine Einmischung des Kalks über die Zuführschnecken von Dickstoffpumpen geschehen, die zum Transport des Schlamms zwischen der mechanischen Entwässerung und der Trocknung eingesetzt werden. Die Mischgüte ist dabei nur von geringer Bedeutung, weil im Trockner selbst eine weitere intensive Vermischung erfolgt.

Wenn man für den Transport zwischen Entwässerung und Trocknung dagegen Trogkettenförderer oder Bänder benutzt, so ist vor dem Trockner ein gasdichter Verschluß in Form einer sog. Stopfschnecke nötig, um im Trockner die Brüden frei von Fremdluft zu halten. Der Kalk kann in diesem Falle auf den Förderer gegeben werden und wird in der Stopfschnecke vorvermischt.

Es ist jedoch auch möglich, den Kalk bereits vor der mechanischen Entwässerung zuzugeben. Bei einigen Entwässerungsverfahren kann dabei ein zusätzlicher Konditioniereffekt auftreten, wenn auch ein gewisser Teil des Kalks mit dem abgetrennten Schlammwasser wieder verlorengeht.

Ferner ist es vorteilhaft möglich, den Kalk im Trockner selbst zuzugeben, da dort zur Verbesserung des Wärmeüberganges sowieso eine intensive Umschichtung erfolgt. Eine Zugabestelle mehr zum Ende des kontinuierlich arbeitenden Trockners ist dabei günstig. Mit abnehmendem Wassergehalt des Gutes wird nämlich der Wärmeübergang zum Trocknungsgut schlechter, so daß es anzustreben ist, den Kalk erst an einer Stelle zuzumischen, wo einerseits noch eine gute Durchmischung gewährleistet ist und andererseits die Vorteile der Kalkzugabe, insbesondere die gute Granulierung des Endprodukts, noch zum Tragen kommt.

Bei der Zugabe im Trockner sollte darauf geachtet werden, daß der Kalk nicht vom Dampf- bzw. Brüdenstrom im Trockner mitgenommen wird. Es kann sich daher eine Einmischung von Kalk in Form einer Aufschlämmung (Kalkmilch oder eines Kalk-Schlamm-Gemischs) empfehlen.

Wenn beispielsweise nur bis 50 % TR getrocknet wird, kann eine zusätzliche oder ausschließliche Zugabe von Kalk nach der Trocknung ebenfalls erwünschte Vorteile bringen, z.B. die Möglichkeit einer Granulierung des Gutes. Hier dürfte Branntkalk als Zugabemittel vorteilhaft sein, weil dadurch ein weiterer Wasserentzug erfolgt.

Diese und weitere Merkmale der Erfindung gehen auch aus den Unteransprüchen und der nachfolgenden Beschreibung eines Ausführungsbeispiels hervor. Auch bei vergleichbaren Gebieten, beispielsweise anderen Schlammarten, können die Merkmale der Erfindung mit Vorteil angewandt werden. Ein Ausführungsbeispiel wird im folgenden anhand einer schematischen Darstellung beschrieben:

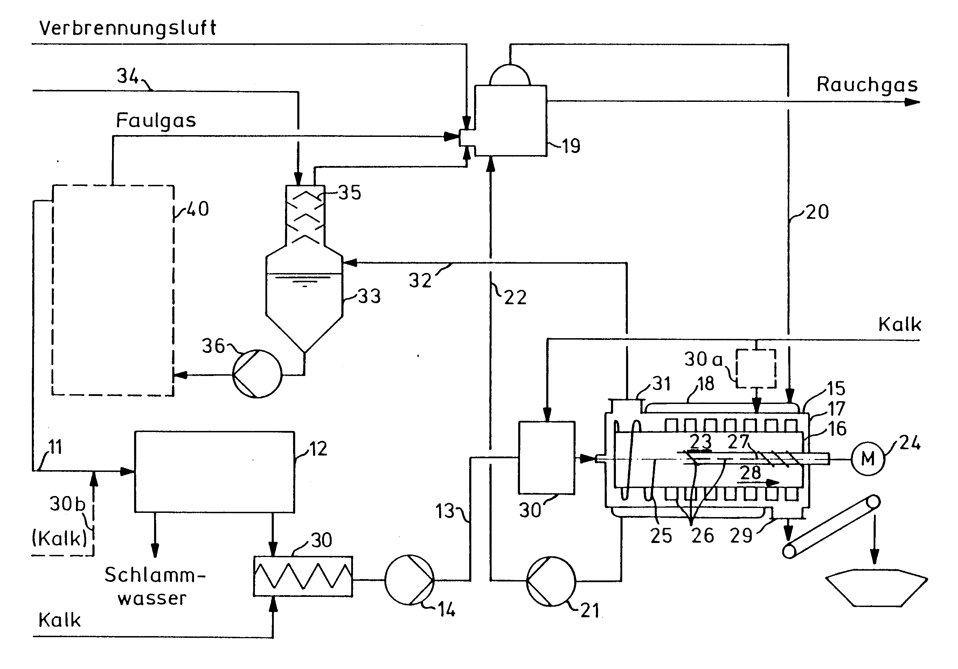

Die Zeichnung zeigt eine schematische Darstellung einer Trocknungseinrichtung und der zugehörigen Teile einer Einrichtung zur Schlammbehandlung.

Von einer nichtdargestellten Schlammfaulungsanlage wird Faulschlamm, der üblicherweise einen Feststoffanteil von 3-5% hat, einer mechanischen Entwässerungseinrichtung 12 zugeführt, die üblicher Art sein kann und nur als Block angedeutet ist. Es eignen sich übliche Zentrifugen, Siebbandpressen oder Filterpressen, die den Schlamm vorentwässern und damit je nach Art der Einrichtung auf 18 bis 28 % Trockenrückstand (TR) bringen. Dieser vorentwässerte Schlamm wird über die Leitung 13 mittels einer Pumpe 14 in einen Trockner 15 eingebracht. Es handelt sich beim bevorzugten Ausführungsbeispiel um einen Dünnschichttrockner, der aus einem liegenden zylindrischen bzw. rohrförmigen Raum 16 besteht, dessen Mantel 17 von einem Ringraum 18 umgeben ist, der mit Dampf beheizt wird.

Der Dampf wird in einem Dampfkessel 19 erzeugt, der vorzugsweise mit Faulgas aus der vorgeschalteten Faulungseinrichtung 40 beheizt wird. Die Dampfversorgung erfolgt über eine Dampfleitung 20. Der Dampf selbst kommt mit dem Trocknungsgut nicht in Berührung, und daher kann das Kondensat über eine Kesselspeisepumpe 21 und eine Kondensatrückführleitung 22 zum Dampfkessel 19 zurückgeführt werden.

In dem Trocknungsraum 16 ist ein Rotor 23 angeordnet, der von einem Motor 24 drehend mit relativ hohen Drehzahlen angetrieben wird. Im Bereich der Schlammzuführung, die unten an einem (in der Zeichnung linken) Ende erfolgt, hat der Rotor eine aufgesetzte Förderschnecke 25, die den Schlamm aus dem Aufgabebereich in den daran nach rechts anschließenden Trocknungsbereich fördert. Im Trocknungsbereich sind an der rohrförmigen Rotoroberfläche Schaufeln 26 angebracht, die mit einem relativ geringen Abstand von beispielsweise 5 mm zum Mantel 17 des Trocknerraumes 16 umlaufen und von denen die meisten in Trocknerlängsrichtung, d.h. parallel zur Rotorachse 27, verlaufen. Einige der Schaufeln sind schräggestellt, um eine Förderwirkung in der Trocknungsgutrichtung (Pfeil 28), d.h. von links nach rechts, zu bewirken.

Der Dünnschichttrockner arbeitet so, daß der eingebrachte Faulschlamm durch die Schaufeln als dünne Schicht auf die über den Siedepunkt von Wasser erhitzte Mantelwandung 17 aufgeschmiert wird. Der Schlamm wird von nachfolgenden Schaufeln bzw. dem nachfolgenden Schlamm von der Wand abgelöst und platzt teilweise auch von selbst ab. Er wird in Förderrichtung 28 weitertransportiert und fällt dann, ggf. durch eine Schleuse, am Ausgabestutzen 29 auf ein Förderband, daß ihn zur weiteren Bearbeitung bringt.

Beim dargestellten Beispiel wird dem Schlamm vor dem Eintritt in den Trockner durch eine in die Leitung 13 eingeschaltete Kalkzugabeeinrichtung 30 Kalk zugegeben. Die Kalkzugabeeinrichtung 30 kann beispielsweise auch aus der sog. Stopfschnecke bestehen, die den vorentwässerten Schlamm in den Trockner fördert und dabei gleichzeitig eine Gasschleuse bildet.

Durch den weitgehend gasdichten Abschluß ist der bei der Trocknung entstehende Dampf (Brüden) mit nur wenig anderen Gasen vermischt und kann daher über den Dampfabzugsstutzen 31 und eine Leitung 32 einem Kondensator 33 zugeleitet werden, der in einfacher Weise als Rohschlammvorwärmer ausgebildet sein kann. Der über eine Leitung 34 zugegebene Rohschlamm fällt über Verteilerbleche 35 in den Kondensationsbehälter und wird dabei von den Brüden erwärmt, die in den Behälter eingeleitet werden. Von dort wird der Schlamm über eine Rohschlammpumpe 36 zu einer nicht dargestellten Faulungseinrichtung gepumpt.

Es ist bereits ausgeführt worden, daß die Zugabe des Kalks auch an anderen Stellen, beispielsweise auch im Bereich des Trockners selbst (siehe die als Alternative strichliert angedeutete Kalkzugabeeinrichtung 30a) oder zwischen zwei hintereinandergeschalteten Trocknern erfolgen kann. Es ist auch möglich, Kalk vor der Entwässerungseinrichtung 12 in die Leitung 11 einzubringen, wie mit der Leitung 30b angedeutet ist.

4

Bei einem Versuch mit einer derartigen Anlage wurden auf einen vorentwässerten Schlamm mit 25 % TR 1 bis 2 % Kalkhydrat zugegeben (entsprechend 4 bis 8 %, bezogen auf die Trockensubstanz). Der so aufgekalkte Faulschlamm wurde im Kontakt-Dünnschichttrockner auf ca. 60 % TR getrocknet. Es ergab sich am Ende des Trockners ohne weitere Nachbehandlung ein Granulat mit einer Korngröße von 2 bis 5 mm (Durchschnittsgröße 3 mm). Dieses Gut ließ sich unmittelbar als Dünge- bzw. Bodenverbesserungsmittel einsetzen und hatte folgende Eigenschaften:

a) Es ist stabilisiert, d.h. bei seiner Handhabung treten keine belästigenden Gerüche auf.

b) Es ist hygenisiert, d.h. seuchenhygienisch unbedenklich, insbesondere infolge der Temperaturbehandlung im Trockner.

c) Es hat ein relativ geringes Gewicht, da die zugesetzte Kalkmenge recht gering sein kann.

d) Die Kalkmenge entspricht den Anforderungen der Landwirtschaft, d.h. sie ist groß genug, um landwirtschaftlich wirksam zu sein, jedoch nicht übermäßig groß.

e) Das Granulat in der angegebenen Größe ermöglicht die unmittelbare Ausbringung auf Düngerstreuer.

f) Es ist biologisch nicht mehr aktiv. Ein Verklumpen, beispielsweise durch Pilzbildung, konnte auch bei längerer Lagerung nicht festgestellt werden.

g) Es enthält keinen oder kaum Feinstaub, jedenfalls nicht in einer Menge, die zur Entzündung oder Bränden führen könnte.

Damit kann der Klärschlamm in idealer Weise nicht nur entsorgt, sondern auch noch nutzbringend eingesetzt werden, und die Kosten dafür sind relativ gering. Das liegt zum Teil auch daran, daß durch die beschriebene Trocknungsart eine nahezu vollständige Rückgewinnung der zur Trocknung aufgewendeten Energie möglich ist und bei Faulungsanlagen das zu anderen Zwecken nur schwer einsetzbare Faulgas als Energiequelle ohnehin zur Verfügung steht.

Die Kalkmenge richtet sich nach der Art des Schlammes, dem gewünschten Trocknungsgrad und auch dem Zugabeort. Sie braucht jedoch nicht so hoch gewählt zu werden, wie bei den früheren Anwendungen, wo der Kalk praktisch selbst als Eindickungsmittel verwendet wurde, um den Schlamm überhaupt auf einer Deponie lagerfähig zu machen. Bei dem beschriebenen Beispiel ist das Verhältnis Kalk zu Restwasser

$$\frac{\% \text{ Kalk}}{(TR_{vorher} + \% \text{ Kalk}) * (100/TR_{nachher} - 1)} =$$

$$\frac{1 \dots 2}{(25 + 1\dots 2) * (100/60 - 1)} = 0.06 \dots 0{,}11 \qquad (1)$$

Da sich maximal 0,0017 kg Kalk in 1 g Wasser lösen, ist also Kalk in großem Überschuß vorhanden; der pH-Wert liegt bei 12. Wenn man dagegen diesen Schlamm auf 35 % TR ohne Trocknung eindickt, so sind das

$$\frac{35 - 25}{1 + 0{,}321 * 0{,}8 - 35/100} = 11 \% \qquad (2)'$$

wobei ein Branntkalk mit 80 % reaktiver Substanz vorausgesetzt wurde. Es ist also festzustellen, daß die Kalkmenge bei der Trocknung nur 1/5 bis 1/10 der Menge zu betragen braucht, die bei der Eindickung von 25 auf 35 % Trockensubstanz notwendig wären.

**Patentansprüche**

**1.** Verfahren zur Herstellung eines getrockneten, granulatförmigen Klärschlamms aus vorentwässertem Klärschlamm, das folgende Verfahrensschritte einschließt:

a) Kalkzugabe zum Klärschlamm in Mengen von 2 % bis 40 %, bezogen auf den Trockensubstanzteil (TR) des Klärschlamms,

b) Trocknung mit wenigstens einem Kontakttrockner (15),

c) Trocknung bis zu einem Trockensubstanzanteil zwischen 40 % und 75 % und
d) auf eine überwiegende Korngröße des entstehenden Granulats zwischen 1 mm und 5 mm.

**2.** Verfahren nach Anspruch 1, dadurch gekennzeichnet, daß der Klärschlamm durch die Kalkzugabe auf einen pH-Wert von mindestens 11 gebracht wird.

**3.** Verfahren nach Anspruch 1 oder 2, dadurch gekennzeichnet, daß der Klärschlamm einer Dünnschichttrocknung unterzogen wird.

**4.** Verfahren nach einem der vorhergehenden Ansprüche, dadurch gekennzeichnet, daß die Trocknung auf einen Trockensubstanzanteil von 60 bis 75 % TR erfolgt.

**5.** Verfahren nach einem der vorhergehenden Ansprüche, dadurch gekennzeichnet, daß die überwiegende Korngröße des Granulats im Bereich von 2 bis 5 mm liegt.

**6.** Verfahren nach einem der vorhergehenden Ansprüche, dadurch gekennzeichnet, daß der Kalk vor dem Trocknen, während des Trocknens und/oder nach der mechanischen Entwässerung zugegeben wird.

**7.** Verfahren nach einem der vorhergehenden Ansprüche, dadurch gekennzeichnet, daß der Klärschlamm und der Kalk im Trockner miteinander gemischt werden.

**8.** Verfahren nach einem der vorhergehenden Ansprüche, dadurch gekennzeichnet, daß der Kalk im Kontakttrockner (15) näher zum Ende des kontinuierlich arbeitenden Kontakttrockners (15) zugegeben wird.

**9.** Verfahren nach einem der vorhergehenden Ansprüche, dadurch gekennzeichnet, daß der Kalk in trockener Pulverform als Branntkalk oder vorzugsweise als Kalkhydrat zugesetzt wird.

**10.** Verfahren nach einem der vorhergehenden Ansprüche, dadurch gekennzeichnet, daß dem Klärschlamm, bezogen auf die Trockensubstanz, zwischen 4 und 12 % Kalk zugesetzt wird.

**Claims**

**1.** Process for the production of a dried, granular sewage sludge from predrained sewage sludge, which has the following process steps:
a) lime addition to the sewage sludge in quantities of 2 to 40%, based on the dry substance content (DR) of the sewage sludge,
b) drying with at least one contact dryer (15),
c) drying to a dry substance content between 40 and 75% and
d) to a preponderant particle size of the resulting granular material between 1 and 5 mm.

**2.** Process according to claim 1, characterized in that by the addition of lime the sewage sludge is brought to a pH-value of at least 11.

**3.** Process according to claims 1 or 2, characterized in that the sewage sludge undergoes film drying.

**4.** Process according to one of the preceding claims, characterized in that the drying takes place to a dry substance content of 60 to 75% DR.

**5.** Process according to one of the preceding claims, characterized in that the preponderant particle size of the granular material is 2 to 5 mm.

**6.** Process according to one of the preceding claims, characterized in that the lime is added prior to drying, during drying and/or after mechanical draining.

**7.** Process according to one of the preceding claims, characterized in that the sewage sludge and the lime are mixed together in the dryer.

**8.** Process according to one of the preceding claims, characterized in that the lime is added to the continuously operating contact dryer (15) closer to the end thereof.

**9.** Process according to one of the preceding claims, characterized in that the lime is added in dry powder form as quicklime or preferably as calcium hydroxide.

**10.** Process according to one of the preceding claims, characterized in that between 4 and 12% lime are added to the sewage sludge, based on the dry substance.

**Revendications**

**1.** Procédé de fabrication de boue de curage à granulés séchée, à partir de boue de curage préalablement déshydratée. Le procédé comporte les opérations de base suivantes :

a. Addition de chaux à la boue de curage en quantité de 2 % à 40 % par rapport à la teneur en matière sèche (TR) de la boue de curage,

b. Dessiccation avec au moins un sécheur de contact (15),

c. Dessiccation jusqu'à une teneur en matière sèche entre 40 % et 75 %, et

d. avec une granularité dominante comprise entre 1 mm et 5 mm des granulés qui en résultent.

**2.** Procédé, d'après la revendication 1, caractérisé par le fait que la boue de curage est portée par l'addition de chaux à une valeur de pH d'au moins 11.

**3.** Procédé, d'après la revendication 1 ou 2, caractérisé par le fait que la boue de curage subit une dessiccation en couche mince.

**4.** Procédé, d'après l'une des revendications précédentes, caractérisé par le fait que la dessiccation est effectuée sur une teneur en matière sèche de 60 % à 75 %.

**5.** Procédé, d'après l'une des revendications précédentes, caractérisé par le fait que la granularité dominante des granulés se situe entre 2 et 5 mm.

**6.** Procédé, d'après l'une des revendications précédentes, caractérisé par le fait que la chaux est ajoutée avant le séchage, pendant le séchage et/ou après la déshydratation mécanique.

**7.** Procédé, d'après l'une des revendications précédentes, caractérisé par le fait que la boue de curage et la chaux sont mélangées l'une avec l'autre dans le sécheur.

**8.** Procédé, d'après l'une des revendications précédentes, caractérisé par le fait que la chaux est ajoutée dans le sécheur de contact (15) vers la fin du sécheur travaillant en continu.

**9.** Procédé, d'après l'une des revendications précédentes, caractérisé par le fait que la chaux est additionnée sous forme de poudre sèche, soit chaux vive, soit de préférence hydrate de calcium.

**10.** Procédé, d'après l'une des revendications précédentes, caractérisé par le fait que entre 4 et 12 % de chaux, par rapport aux matières sèches réelles, est ajoutée à la boue de curage.